# FASCICULE DE BREVET EUROPEEN

(11) **EP 0 780 589 B1**
(45) Date de publication et mention de la délivrance du brevet: **21.03.2001**
(21) Numéro de dépôt: 96120477.3
(22) Date de dépôt: 19.12.1996
(51) Int. Cl.: F16D 13/71, F16D 13/50

(54) **Module d'embrayage dont le couvercle est fixé sur un flasque de support par des pattes transversales**
Kupplungseinheit wobei der Deckel durch Querfinger auf einem Stützflansch befestigt ist
Clutch unit comprising a cover which is mounted on a supporting flange by means of transverse legs

(30) Priorité: 20.12.1995 FR 9515139
(43) Date de publication de la demande: 25.06.1997
(73) Titulaire: VALEO, 75017 Paris (FR)
(72) Inventeur: Giroire, Jean-Pierre, 78100 St. Germain en Laye (FR); Ray, Marc, 80000 Amiens (FR)
(74) Mandataire: Gamonal, Didier

(56) Documents cités:
- EP-A- 0 208 400
- WO-A-95/11391
- DE-A- 4 142 124
- FR-A- 2 070 392
- FR-A- 2 526 105
- FR-A- 2 526 106
- FR-A- 2 712 361
- GB-A- 2 119 039
- GB-A- 2 144 810
- GB-A- 2 243 884
- GB-A- 2 248 476

## Description

La présente invention concerne un module d'embrayage, notamment pour véhicule automobile, dont le couvercle est fixé sur un flasque de support par des pattes transversales.

L'invention concerne plus particulièrement un module d'embrayage, notamment pour véhicule automobile, du type comportant un ensemble de pièces adjacentes de forme générale annulaire et coaxiales parmi lesquelles sont agencés successivement axialement un couvercle, un diaphragme, un plateau de pression lié en rotation au couvercle par des moyens d'attelage permettant un déplacement axial du plateau de pression par rapport au couvercle, un disque de friction propre à être relié à un arbre mené, tel que par exemple l'arbre d'une boîte de vitesses, et un plateau de réaction, et du type dans lequel le disque de friction comporte au moins une garniture annulaire périphérique de friction interposée entre des faces radiales en vis-à-vis de friction des plateaux de pression et de réaction, dans lequel le diaphragme prend appui contre le couvercle et le plateau de pression pour solliciter axialement ce dernier dans le sens correspondant au serrage de la garniture de friction, module dans lequel le plateau de réaction est solidaire d'un flasque de support propre à être solidarisé en rotation avec un arbre menant, tel que le vilebrequin d'un moteur à combustion interne, au moyen d'une série d'organes de fixation agencés radialement vers l'intérieur par rapport aux moyens de fixation du plateau de réaction sur le flasque de support, dans lequel le plateau de pression est lié directement en rotation au couvercle par lesdits moyens d'attelage et le couvercle comporte à sa périphérie externe une jupe qui s'étend axialement depuis un bord périphérique du couvercle.

Un exemple d'un tel type de module d'embrayage est décrit et représenté dans la demande de brevet français déposée le 24 Août 1994 sous le numéro 94 10310 et publiée sous le numéro 2 723 996. Selon cet exemple, le couvercle est fixé par soudage à une jupe d'orientation axiale que présente le flasque de support.

Une telle disposition permet pour un encombrement radial donné d'augmenter la taille de la ou des garnitures de friction du disque de friction et/ou celle de l'amortisseur que comporte usuellement ledit disque dans sa partie centrale.

Une telle disposition présente également de nombreux autres avantages.

On peut régler la charge qu'exerce le diaphragme et/ou son inclinaison ou sa position, en rapprochant axialement plus ou moins le flasque de support et le couvercle.

On obtient ainsi un montage aisé de manière télescopique du couvercle.

Malheureusement, une telle opération de soudage ne permet pas, sans artifices de maintien des pièces pendant l'opération de soudage, une grande précision de la distance axiale séparant le couvercle et le flasque de support.

Il en est de même dans le document DE 41 42 124 conforme au préambule de la revendication 1

La présente invention a pour but de pallier cet inconvénient.

Selon l'invention, un module d'embrayage notamment pour véhicule automobile, du type comportant un ensemble de pièces adjacentes de forme générale annulaire et coaxiales parmi lesquelles sont agencés successivement axialement un couvercle, un diaphragme, un plateau de pression lié en rotation au couvercle par des moyens d'attelage permettant un déplacement axial du plateau de pression par rapport au couvercle, un disque de friction propre à être relié à un arbre mené, et un plateau de réaction, et du type dans lequel le disque de friction comporte au moins une garniture annulaire périphérique de friction interposée entre des faces radiales en vis-à-vis de friction des plateaux de pression et de réaction, dans lequel le diaphragme prend appui contre le couvercle et le plateau de pression pour solliciter axialement ce dernier dans le sens correspondant au serrage de la garniture de friction, module dans lequel le plateau de réaction est solidaire d'un flasque de support propre à être solidarisé en rotation à un arbre menant, au moyen d'une série d'organes de fixation agencés radialement vers l'intérieur par rapport aux moyens de fixation du plateau de réaction sur le flasque de support, dans lequel le plateau de pression est lié directement en rotation au couvercle par lesdits moyens d'attelage, le couvercle et le flasque de support (22) comportent chacun à leur périphérie externe une jupe qui s'étend axialement, l'une desdites jupes entourant l'autre sur au moins une partie de sa longueur axiale, est caractérisé par le fait que la jupe entourant l'autre présente au moins une patte d'orientation circonférentielle dont l'extrémité au moins est rabattue dans une ouverture ménagée dans l'autre jupe, la coopération d'au moins un bord transversal de ladite patte avec le bord transversal en regard, de l'ouverture, constituant une butée axiale entre le couvercle et le flasque de support au moins dans le sens de leur éloignement dans le sens axial.

Avantageusement, avant rabattement de l'extrémité de la patte s'étendant circonférentiellement, ledit bord transversal de celle-ci fait un angle avec le bord transversal de l'ouverture en sorte que la position axiale de ladite butée est réglable axialement.

De préférence, il est prévu au moins une seconde patte dont un bord transversal permet après rabattement de constituer une butée axiale entre le couvercle et le flasque de support dans le sens de leur rapprochement dans le sens axial ; le bord transversal de la seconde patte coopère, après rabattement de l'extrémité de celle-ci, avec le bord transversal en regard d'une seconde ouverture.

Avantageusement, ladite jupe entourant l'autre jupe est la jupe du couvercle.

De préférence, l'extrémité libre de la jupe entourant l'autre est à une distance radiale de la jupe qu'elle entoure suffisante, et crénelée, pour constituer une cible.

Avantageusement, le module d'embrayage comporte une cible définissant des créneaux, ladite cible étant une pièce en tôle rapportée solidarisée par soudage à l'une desdites jupes ; ledit module comportant une couronne de démarreur portée par le flasque de support, la cible est solidarisée par soudage à la jupe du flasque de support en étant placée axialement contre la couronne de démarreur.

Avantageusement, l'embrayage est du type poussé.

En variante, il est du type tiré.

Grâce à l'invention, on obtient de manière simple et économique (sans faire appel à une opération de soudage) une grande précision de réglage de la distance axiale séparant le couvercle et le flasque de support.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue en section axiale d'un module d'embrayage selon l'invention ;
- la figure 2 est une vue à plus grande échelle de la partie inférieure de la figure 1 ;
- la figure 3 est une vue partielle en coupe selon III-III de la figure 2 ;
- la figure 4 est une vue partielle selon la flèche IV de la figure 2 ;
- les figures 5 et 6 sont analogues aux figures 3 et 4 et concernent une variante, la figure 6 étant une vue selon la flèche VI de la figure 5 ;
- la figure 7 est une vue analogue à la figure 6 et concerne une variante ;
- la figure 8 est une vue partielle en coupe analogue à la figure 2 et concerne une variante ;
- la figure 9 est une vue partielle en coupe selon IX-IX de la figure 8 ;
- la figure 10 est une vue selon la flèche X de la figure 9 ;
- la figure 11 est une vue partielle des figures 2 et 8 montrant une variante de solidarisation du plateau de réaction et du flasque de support.

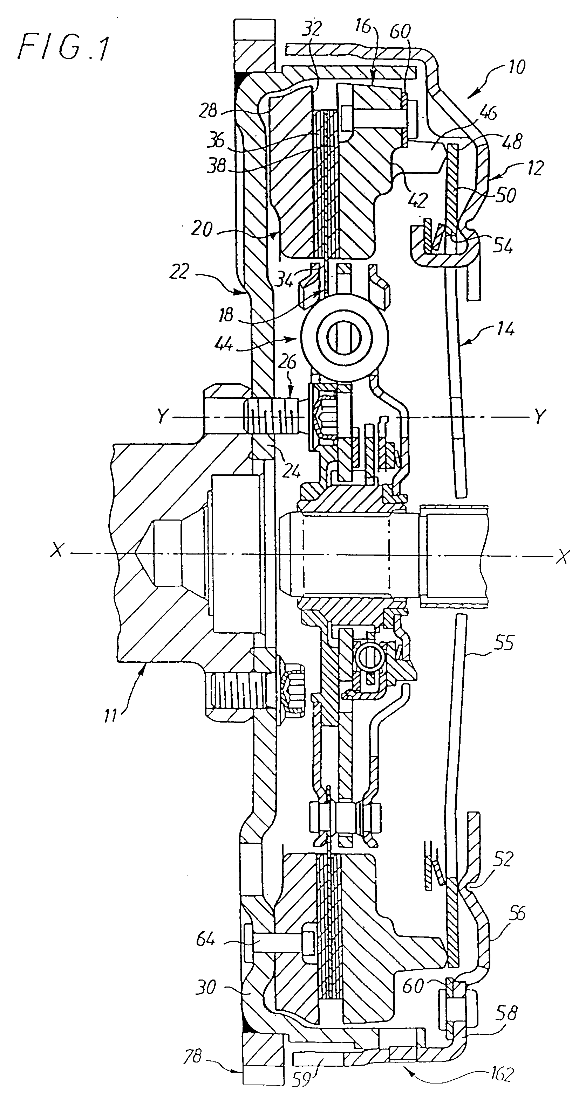

On a représenté sur les figures 1 à 4 un module d'embrayage pour véhicule automobile.

Le module 10 comporte de manière unitaire un ensemble de pièces adjacentes de forme générale annulaire et coaxiales selon l'axe X-X du module d'embrayage. Parmi ces pièces annulaires, on distingue, successivement axialement, un couvercle 12, un diaphragme 14, un plateau de pression 16, un disque de friction 18 et un plateau de réaction 20.

Le plateau de réaction 20 est destiné à être calé en rotation sur le vilebrequin 11 d'un moteur à combustion interne de véhicule automobile en étant fixé à celui-ci par l'intermédiaire d'un flasque de support 22 en forme de disque annulaire dont la partie centrale 24 est fixée au vilebrequin par des vis 26 et dont la couronne annulaire périphérique 30 est prolongée par une jupe annulaire 130, d'orientation axiale dont le rôle apparaîtra ci-après.

Le plateau de réaction 20 est une pièce de forme annulaire, en fonte, délimitée axialement par une première face radiale 28 d'orientation générale transversale contre laquelle prend appui la couronne annulaire périphérique 30 du flasque de support 22, ici métallique, et par une face radiale opposée 32 qui est une face usinée constituant l'une des faces de friction pour le disque de friction 18.

Le disque de friction, selon un exemple de réalisation connu, est constitué ici pour l'essentiel par un disque de support de forme générale annulaire 34 qui porte sur chacune de ses faces opposées une garniture de friction annulaire continue. Une première garniture 36 est prévue pour coopérer avec la face radiale de friction 32 du plateau de réaction 20, tandis que la garniture de friction opposée 38 est prévue pour coopérer avec une face radiale de friction 40 qui constitue l'une des deux faces transversales délimitant le plateau de pression 16 qui est une pièce de forme générale annulaire en fonte délimitée axialement, à l'opposé de la face de friction 40, par une face d'orientation générale transversale 42.

Selon une conception connue, le disque 34 de support des garnitures de friction 36 et 38 est prévu pour être relié par l'intermédiaire d'un moyeu central (non référencé) cannelé intérieurement à un arbre mené tel que par exemple l'arbre d'entrée de la boîte de vitesses équipant le véhicule automobile, avec interposition d'un amortisseur 44 qui ne sera pas décrit ici plus en détail. Il est à noter toutefois que l'amortisseur 44 est du type de celui qui est décrit dans le document FR-A-2 710 377 ou dans la demande de brevet français déposée le 24 Août 1994 sous le numéro 94 10 310 : les rondelles et le voile de l'amortisseur principal et du préamortisseur dudit amortisseur 44 sont dotés, radialement en dessous des organes élastiques accouplant élastiquement le voile aux rondelles, de trous et/ou échancrures en coïncidence selon un axe commun Y-Y permettant le passage d'un outil pour le montage du module d'embrayage sur le vilebrequin 11 par serrage des vis 26 solidarisant le flasque de support 22 audit vilebrequin 11.

La face transversale 42 du plateau de pression 16 comporte une série de bossages 46 répartis angulairement de manière régulière et dont chacun s'étend axialement en saillie en direction du couvercle 12 pour constituer des appuis pour la zone périphérique externe 48 de la rondelle annulaire élastique 50 constituant la partie périphérique externe du diaphragme 14. En effet, selon une conception connue, le diaphragme 14 comporte une partie annulaire périphérique externe 50, en forme de rondelle Belleville, qui est interposée élastiquement entre les bossages 46 du plateau de pression 16 et une nervure annulaire d'appui 52 qui s'étend en relief vers l'intérieur du couvercle 12 et sur laquelle prend appui la zone périphérique intérieure 54 de la rondelle Belleville, cette dernière étant prolongée radialement vers l'intérieur par une partie centrale fragmentée en doigts radiaux 55 par des fentes séparant deux à deux lesdits doigts.

La rondelle Belleville 14 a pour fonction de solliciter axialement le plateau de pression dans le sens correspondant au serrage axial du disque de friction 18 entre les faces de friction 32 et 40.

Le couvercle 12, ici métallique, de forme creuse est constitué pour l'essentiel par un voile annulaire 56 d'orientation générale transversale qui est troué centralement et qui comporte au voisinage de son bord périphérique extérieur 58 des moyens 60 pour un attelage avec le plateau de pression 16, ces moyens d'attelage 60 permettant, selon une conception connue, un déplacement axial relatif du plateau de pression 16 par rapport au couvercle 12. Ils interviennent directement entre le plateau de pression 16 et le couvercle 12. Les moyens d'attelage 60 consistent ici, de manière connue, en des languettes élastiques d'orientation tangentielle dont une extrémité est fixée par rivetage au bord périphérique extérieur 58 du voile 56, constituant le fond du couvercle 12, et dont l'autre extrémité est fixée au plateau de pression 16.

Ici la fixation est réalisée à l'aide de rivets, en variante elle peut être réalisée à l'aide de vis, de boulons ou tous autres organes de fixation. Le bord 58 est globalement d'orientation transversale. Ce bord est percé pour accès aux têtes des rivets de fixation des languettes 60 au plateau de pression 16. La face de friction 40 du plateau 16 présente localement des logements pour accès auxdits rivets. Ainsi, on fixe d'abord les languettes 60 au rebord 58, le diaphragme 14 étant déjà monté sur le couvercle 12, puis on fixe l'autre extrémité des languettes. On obtient ainsi un premier sous ensemble unitaire comprenant le plateau de pression 16, le diaphragme 14 et le couvercle 12.

Le couvercle 12 comporte également des moyens de fixation 162 qui s'étendent axialement depuis son bord périphérique extérieur 58 en direction du plateau de réaction 20 et qui permettent la fixation du couvercle 12 sur le flasque de support 22 de manière à réaliser un module d'embrayage constituant un sous-ensemble pouvant être monté et fixé sur le flasque de support 22 par une série de rivets de fixation 64.

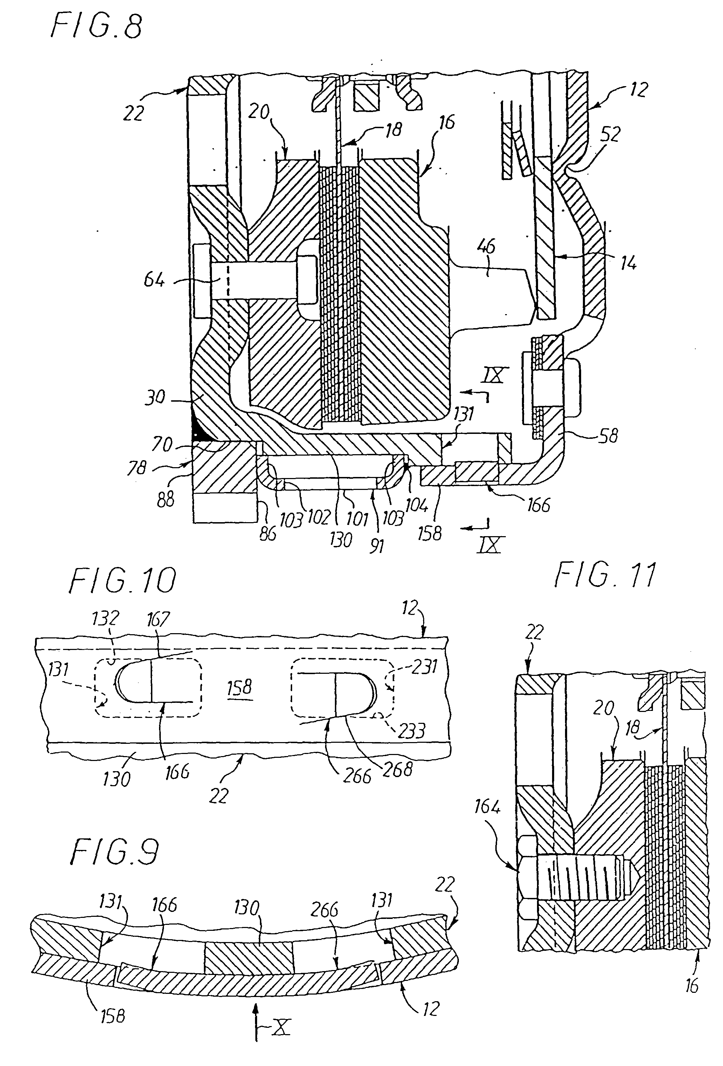

Les rivets 64 sont implantés radialement en dessous des moyens de fixation 162. En variante, comme montré sur la figure 11, les rivets 64 sont remplacés par des vis 164 ; la tige filetée des vis 164 traverse la couronne 30 du flasque 22 pour se visser dans un trou taraudé réalisé dans le plateau 20. En variante, les vis 164 traversent le plateau 20 pour se visser dans un écrou de préférence solidaire de la couronne 30 par exemple par soudage.

Quoi qu'il en soit, les garnitures de friction 36, 38 ont une grande hauteur et peuvent venir au plus près des moyens de fixation 162. Pour un encombrement radial donné du module 10, on obtient, grâce aux moyens de fixation 162, une grande hauteur pour les garnitures de friction 36, 38.

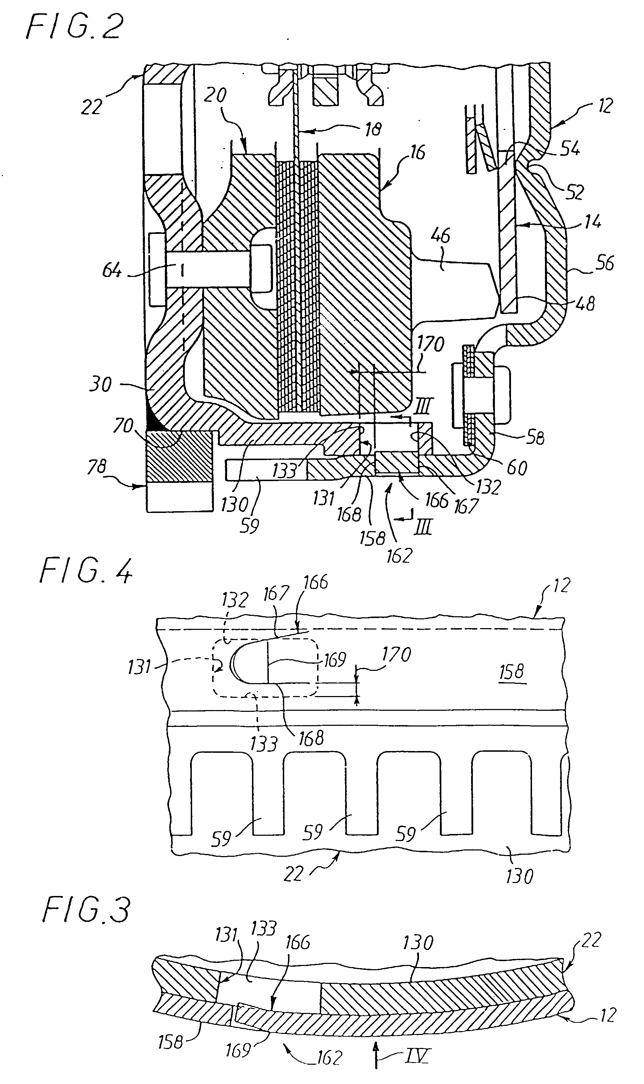

On décrira maintenant plus en détail, en se reportant plus particulièrement aux figures 2 à 4, les moyens de fixation 162 du couvercle 12 sur le flasque de support 22.

Les moyens de fixation 162 sont constitués par une série de pattes de fixation 166, d'orientation circonférentielle, c'est-à-dire s'étendant globalement transversalement.

Plus précisément, les pattes 166 sont issues d'une jupe annulaire 158, d'orientation axiale, s'étendant à la périphérie externe du rebord périphérique externe 58 du fond 56 du couvercle 12 ; la jupe 158 du couvercle entoure la jupe 130 du flasque de support 22.

La jupe 130 est d'orientation axiale et s'étend à la périphérie externe du flasque de support 22 et ce en direction du voile 56 ; cette jupe 130, par la périphérie externe de son extrémité libre, est en contact intime avec la périphérie interne de la jupe 158 du couvercle 12.

Globalement au droit des pattes 166, la jupe 130 du flasque de support 22 présente des ouvertures 131 ; selon l'exemple représenté sur les figures 1 à 4, les ouvertures 131 ont une forme générale rectangulaire et les pattes 166 ont une forme générale triangulaire en sorte qu'elles présentent un bord transversal 167 dit interne, c'est-à-dire le plus proche du voile 56, ou fond, du couvercle 12, incliné par rapport à un plan transversal, perpendiculaire donc à l'axe X-X ; les bords transversaux 132, 133 des ouvertures 131 étant chacun contenu dans un tel plan transversal, le bord transversal interne 167 de chaque patte 166 fait donc un angle avec le bord transversal 132 dit externe, c'est-à-dire le plus éloigné de la couronne annulaire périphérique 30 du flasque de support 22, de chaque ouverture 131 ; la largeur axiale maximale de la patte 166 est de l'ordre de grandeur de la largeur axiale de l'ouverture 131 ; ainsi, pour un positionnement relatif dans le sens axial des jupes 158 et 130, respectivement du couvercle 12 et du flasque de support 22, et dans la limite d'un certain débattement axial, il est possible, en rabattant l'extrémité de la patte 166 dans l'ouverture 131, de constituer une butée axiale entre le couvercle 12 et le flasque de support 22 dans le sens de leur éloignement dans le sens axial : ici, la butée est réalisée par coopération du bord longitudinal interne 167 de la patte 166 avec le bord longitudinal externe 132 de l'ouverture 131, au droit de la pliure 169 de la patte 166 dont le bord longitudinal externe 168 est à une distance axiale 170 du bord longitudinal interne 133 de l'ouverture 131 ; comme on l'aura compris, grâce à de telles pattes 166, ladite butée est réglable axialement, dans la limite bien entendu du débattement axial ci-dessus. Et le bord 168 de la patte 166 est parallèle au bord 133 en sorte que l'on obtient un bon contact.

On notera qu'ici l'embrayage est du type poussé, le diaphragme 14 étant monté de manière basculante sur le couvercle 12. Normalement, le diaphragme 14 prend appui sur la nervure 52 du couvercle 12, formant un appui primaire pour le diaphragme 14, et sollicite, grâce aux bossages 46, le plateau de pression 16 en direction du plateau de réaction 20 pour serrage des garnitures de friction 36, 38 entre les plateaux 16, 20.

Ainsi le couple est transmis du vilebrequin, au moyen du disque de friction 18, à l'arbre d'entrée de la boîte de vitesses.

L'embrayage est ainsi engagé.

Dans cette position où l'embrayage est engagé, les bords transversaux 167 de la patte 166 et 132 de l'ouverture 131 sont en butée.

Pour désengager l'embrayage, on agit en poussant à l'aide d'une butée de débrayage non représentée sur l'extrémité interne des doigts 55 du diaphragme 14.

Cet effort à la butée est transmis au couvercle 12 par le diaphragme 14 par l'intermédiaire de son appui secondaire décrit ci-après.

Ici, le diaphragme 14 est monté basculant sur le couvercle 12, de manière connue, à l'aide de pattes d'assemblage issues d'un seul tenant de celui-ci par découpe et plage, le couvercle étant en tôle emboutie. Les pattes sont d'orientation axiale et traversent le diaphragme à la faveur d'orifices que celui-ci présente au niveau de la racine de ses doigts 55, c'est-à-dire à la périphérie interne 54 de sa rondelle Belleville 50. Ces orifices forment l'extrémité borgne élargie des fentes séparant les doigts 55. Au-delà du diaphragme, les pattes, à leur extrémité libre, sont repliées radialement en direction opposée à l'axe de l'ensemble X-X pour formation d'un coude de calage pour une rondelle de support d'une couronne-jonc prenant appui sur l'autre face du diaphragme 14. Cette couronne-jonc, intercalée entre le diaphragme 14 et la rondelle de support, est de forme tronconique et présente à sa périphérie externe une forme arrondie pour contact avec le diaphragme 14 et formation d'un appui secondaire en vis-à-vis de l'appui primaire 52.

Bien entendu la présence de la rondelle de support n'est pas obligatoire. En variante, les pattes d'assemblage peuvent être remplacées par des colonnettes dont la tête est profilée pour former un appui secondaire, lesdites colonnettes portant un jonc interposé entre le fond du couvercle et le diaphragme pour former l'appui primaire.

Ainsi, dans une première phase, le couvercle 12 est déplacé vers le flasque de support 22 dans la limite du jeu 170 décrit ci-dessus, existant entre le bord longitudinal externe 168 de la patte 166 du couvercle 12 et le bord longitudinal interne 133 de l'ouverture ; il est à noter que dans cette première phase le diaphragme 14 se déforme en prenant appui sur les bossages 46, l'effort de débrayage à la butée profitant d'un grand bras de levier correspondant à la somme de la largeur radiale de la rondelle Belleville et de la longueur des leviers 55 qui le constituent ; par ailleurs, comme on le sait, au cours de cette déformation la charge du diaphragme diminue : ainsi , grâce à cette disposition, l'opération de débrayage est tout naturellement assistée.

Cette première phase prend fin lorsque le jeu 170 est complètement absorbé, le bord transversal externe 168 des pattes 166 prenant alors appui sur le bord transversal interne 133 des ouvertures 131 : le couvercle 12 est fixe axialement par rapport au flasque de support 22 et la deuxième phase de débrayage est une phase classique de débrayage d'un embrayage du type poussé, le diaphragme 14 pivotant autour de son appui secondaire ; les languettes rappellent alors le plateau de pression 16 en direction du fond du couvercle en sorte que les garnitures de friction 36, 38 sont libérées. L'embrayage est alors désengagé.

Bien entendu, l'embrayage peut être du type tiré, la rondelle Belleville 50 s'appuyant alors à sa périphérie externe sur une nervure annulaire du couvercle 12 et à sa périphérie interne sur un bossage du plateau de pression 16. Dans ce cas, on agit, à l'aide de la butée de débrayage, en tirant sur l'extrémité interne des doigts 55 du diaphragme pour désengager l'embrayage. Ici, comme on le comprend aisément, l'effort de débrayage transmis au couvercle par le diaphragme continue d'appliquer le bord transversal interne 167 des pattes 166 contre le bord transversal externe 132 de l'ouverture 131 du flasque de support 22 : le couvercle 12 est donc toujours fixe par rapport au flasque de support 22 et l'embrayage fonctionne comme un embrayage classique du type tiré.

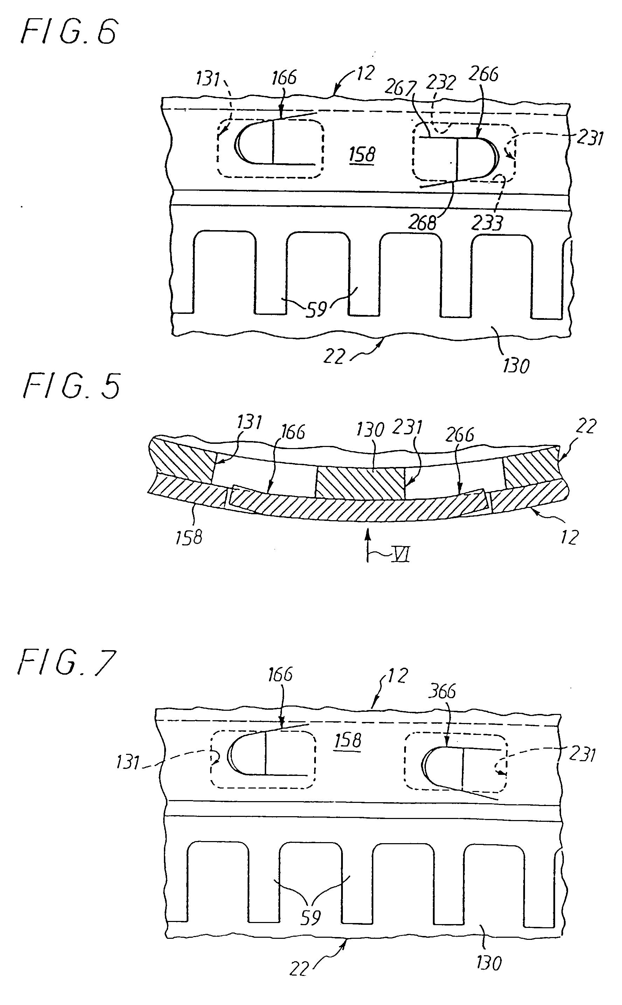

Il est possible, si on le souhaite, d'immobiliser complètement axialement le couvercle 12 par rapport au flasque de support 22 ; c'est ce que permet la variante illustrée sur les figures 5 et 6 ; selon cette variante, la jupe 158 du couvercle 12 présente, outre une série de pattes 166 comme décrites à propos de la variante précédente, une série d'autres pattes 266 adaptées à coopérer avec une autre série d'ouvertures 231 ménagées dans la jupe 130 du flasque de support 22. Les pattes 266 sont analogues aux pattes 166 et s'en déduisent par rotation de 180 degrés, en étant décalées axialement l'une par rapport à l'autre et adaptées à coopérer avec des ouvertures 231 identiques aux ouvertures 131 ; dès lors, c'est le bord transversal externe 268 qui est amené à coopérer avec le bord transversal interne 233 de l'ouverture 231 avec lequel il fait un angle, tandis que le bord transversal interne 267 de la patte 266 est parallèle au, et à distance du, bord externe 232 de l'ouverture 231 : par rabattement de l'extrémité des pattes 166 et 266, on immobilise axialement le couvercle 12, et ce de façon réglable comme décrit ci-dessus.

Un résultat analogue peut être obtenu en disposant, outre la série de pattes 166, une deuxième série de pattes dont les extrémités sont dirigées dans le même sens circonférentiel, comme c'est le cas des pattes 366 montrées sur la figure 7.

Dans le mode de réalisation illustré sur les figures, le module d'embrayage 10 porte à sa périphérie une couronne de démarreur 78, ici métallique, de forme générale annulaire comportant un corps cylindrique annulaire et des dents 82.

La couronne de démarreur 78 est montée sur la surface périphérique externe 70 du flasque de support 22.

On sait que, pour l'allumage ou l'alimentation, notamment par injection, des moteurs, il est nécessaire d'effectuer ces opérations à des positions précises angulaire du vilebrequin ; à cet effet, un capteur dit de position est solidaire du carter moteur et vise une cible, en générale crénelée, tournant, au droit du capteur, dans un plan transversal, perpendiculaire à l'axe du vilebrequin et solidaire en rotation de celui-ci ; une telle cible est souvent utilisée également pour obtenir une information image de la vitesse du vilebrequin, variable le plus souvent prise en compte pour les opérations ci-dessus.

Ici, comme on le voit sur les figures 1 à 7, la jupe du couvercle 12 est mise à profit pour la réalisation d'une telle cible ; celle-ci est obtenue par un découpage en créneaux du bord périphérique externe de ladite jupe, lesdits créneaux étant définis par des doigts axiaux 59, répartis circonférentiellement, qui s'étendent au droit de la jupe 130 du flasque de support 22 à une distance radiale de celle-ci suffisante pour que les informations fournies par le capteur associé à la cible soient d'une grande fiabilité.

La cible devant être adaptée à chaque application, ne serait-ce par exemple qu'aux cas des différents moteurs à essence, à allumage commandé, et des moteurs Diesel, une telle disposition conduit à la réalisation de couvercles spécifiques, ce qui dans certains cas peut s'avérer être onéreux.

Selon la variante des figures 8 à 10, la jupe du couvercle 12 ne comporte pas de doigts axiaux, la cible étant constituée par une pièce rapportée ; plus précisément, ici la cible 91 est une pièce en tôle rapportée, solidarisée par soudage ; elle comprend une partie médiane cylindrique 101 munie d'ouvertures 102 réparties circonférentiellement et reliée par des entretoises 103 à la jupe 130 du flasque de support 22 ; les entretoises 103 sont ici en forme de joues pleines transversales ; comme on le voit sur la figure 8, la cible 91 est placée axialement contre la couronne de démarreur 78 en sorte que, pour sa solidarisation à la jupe 130, un cordon de soudure 104 est prévu seulement entre ladite jupe 130 et la joue 103 opposée à celle qui est en contact avec la couronne de démarreur 78.

Grâce à cette disposition, le couvercle 12 peut être standard et la cible 91 ne risque pas de se déployer sous l'action de la force centrifuge car l'entretoise 103 concernée bute contre la couronne de démarreur 78.

Bien entendu, le disque de friction peut ne comporter qu'une seule garniture de friction à l'intérieur de laquelle est noyé le disque 34. Cette garniture présente deux faces pour coopérer avec les faces de friction 32 et 40.

Bien entendu, le nombre de pattes 166, 266 et d'ouvertures 131, 231 dépend des applications, lesdites pattes et ouvertures étant de préférence réparties de manière régulière circonférentiellement. On appréciera que le pliage des pattes 166, 266 est facile à réaliser et est économique.

## Revendications

1. Module d'embrayage (10), notamment pour véhicule automobile, du type comportant un ensemble de pièces adjacentes de forme générale annulaire et coaxiales parmi lesquelles sont agencés successivement axialement un couvercle (12), un diaphragme (14), un plateau de pression (16) lié en rotation au couvercle (12) par des moyens d'attelage (60) permettant un déplacement axial du plateau de pression (16) par rapport au couvercle (12), un disque de friction (18) propre à être relié à un arbre mené, et un plateau de réaction (20), et du type dans lequel le disque de friction (18) comporte au moins une garniture annulaire périphérique de friction (36, 38) interposée entre des faces radiales en vis-à-vis de friction des plateaux de pression (16) et de réaction (20), dans lequel le diaphragme (14) prend appui contre le couvercle (12) et le plateau de pression (16) pour solliciter axialement ce dernier dans le sens correspondant au serrage de la garniture de friction (36, 38), module dans lequel le plateau de réaction (20) est solidaire d'un flasque de support (22) propre à être solidarisé en rotation à un arbre menant, au moyen d'une série d'organes de fixation (64) agencés radialement vers l'intérieur par rapport aux moyens de fixation du plateau de réaction (20) sur le flasque de support (22), dans lequel le plateau de pression (16) est lié directement en rotation au couvercle (12) par lesdits moyens d'attelage (60), le couvercle (12) et le flasque de support (22) comportent chacun à leur périphérie externe une jupe (130, 158) qui s'étend axialement, l'une (158) desdites jupes entourant l'autre (130) sur au moins une partie de sa longueur axiale, caractérisé par le fait que la jupe (158) entourant l'autre (130) présente au moins une patte (166, 266, 366) d'orientation circonférentielle dont l'extrémité au moins est rabattue dans une ouverture (131, 231) ménagée dans l'autre jupe (130), la coopération d'au moins un bord transversal (167, 268) de ladite patte (166, 266, 366) avec le bord transversal (132, 233) en regard, de l'ouverture (131, 231), constituant une butée axiale entre le couvercle (12) et le flasque de support (22) au moins dans le sens de leur éloignement dans le sens axial.

2. Module d'embrayage selon la revendication 1, caractérisé par le fait que, avant rabattement de l'extrémité de la patte (166, 266, 366), ledit bord transversal (167, 268) de celle-ci fait un angle avec le bord transversal (132, 233) de l'ouverture (131, 231) en sorte que la position axiale de ladite butée est réglable axialement.

3. Module d'embrayage selon l'une des revendications 1 ou 2, caractérisé par le fait qu'il est prévu au moins une seconde patte (266, 366, 166) dont un bord transversal (268, 167) permet après rabattement de constituer une butée axiale entre le couvercle (12) et le flasque de support (22) dans le sens de leur rapprochement dans le sens axial.

4. Module d'embrayage selon la revendication 3, caractérisé par le fait que le bord transversal (268, 167) de la seconde patte (266, 366, 166) coopère, après rabattement de l'extrémité de celle-ci, avec le bord transversal (268, 167) en regard d'une seconde ouverture (231, 131).

5. Module d'embrayage selon la revendication 4, caractérisé en ce que la seconde patte (266, 366, 166) a une extrémité dirigée dans le même sens circonférentiel que la première patte (166).

6. Module d'embrayage selon l'une quelconque des revendications 1 à 5, caractérisé en ce que les pattes (166, 266, 366) ont une forme générale triangulaire, tandis que les ouvertures (131, 231) ont une forme rectangulaire.

7. Module d'embrayage selon l'une des revendications 1 à 6, caractérisé par le fait que ladite jupe (158) entourant l'autre jupe (130) est la jupe du couvercle (12).

8. Module d'embrayage selon l'une des revendications 1 à 6, caractérisé par le fait que l'extrémité libre de la jupe (158) entourant l'autre (130) est à une distance radiale de la jupe (130) qu'elle entoure suffisante, et crénelée, pour constituer une cible (59).

9. Module d'embrayage selon l'une des revendications 1 à 6, caractérisé par le fait qu'il comporte une cible (91) définissant des créneaux, ladite cible (91) étant une pièce en tôle rapportée solidarisée par soudage à l'une (130) desdites jupes.

10. Module d'embrayage selon la revendication 9, dans lequel ledit module comporte une couronne de démarreur (78) portée par le flasque de support (22), caractérisé par le fait que la cible (91) est solidarisée par soudage à la jupe (130) du flasque de support (22) en étant placée axialement contre la couronne de démarreur (78).

11. Module d'embrayage selon l'une des revendications 1 à 10, caractérisé par le fait que l'embrayage est du type poussé.

12. Module d'embrayage selon l'une des revendications 1 à 10, caractérisé par le fait que l'embrayage est du type tiré.

## Claims

1. Clutch module (10), notably for a motor vehicle, of the type having a set of adjacent parts which are generally annular in shape and coaxial, amongst which are successively arranged axially a cover (12), a diaphragm (14), a pressure plate (16) connected with respect to rotation to the cover (12) by coupling means (60) allowing an axial movement of the pressure plate (16) with respect to the cover (12), a friction disc (18) able to be connected to a driven shaft, and a reaction plate (20), and of the type in which the friction disc (18) has at least one peripheral annular friction lining (36, 38) interposed between facing radial friction faces of the pressure plate (16) and reaction plate (20), in which the diaphragm (14) bears against the cover (12) and the pressure plate (16) in order to axially force the latter in the direction corresponding to the clamping of the friction lining (36, 38), a module in which the reaction plate (20) is fixed to a support plate (22) able to be fixed with respect to rotation to a driving shaft, at least one series of fixing members (64) arranged radially towards the inside with respect to the means of fixing the reaction plate (20) to the support plate (22), in which the pressure plate (16) is directly connected with respect to rotation to the cover (12) by the said coupling means (60), the cover (12) and the support plate (22) each having at their external periphery a skirt (130, 158) which extends axially, one (158) of the said skirts surrounding the other (130) over at least part of its axial length, characterised by the fact that the skirt (158) surrounding the other (130) has at least one circumferentially oriented lug (166, 266, 366) whose end at least is folded down in an opening (131, 231) provided in the other skirt (130), the co-operation of at least one transverse edge (167, 268) of the said lug (166, 266, 366) with the facing transverse edge (132, 233) of the opening (131, 231) constituting an axial stop between the cover (12) and the support plate (22) at least in the direction of their moving away in the axial direction.

2. Clutch module according to Claim 1, characterised by the fact that, before folding down of the end of the lug (166, 266, 366), the said transverse edge (167, 268) thereof forms an angle with the transverse edge (132, 233) of the opening (131, 231) so that the axial position of the said stop is axially adjustable.

3. Clutch module according to one of Claims 1 or 2, characterised by the fact that there is provided at least one second lug (266, 366, 166), a transverse edge (268, 167) of which, after folding down, constitutes an axial stop between the cover (12) and the support plate (22) moving closer in the axial direction.

4. Clutch module according to Claim 3, characterised by the fact that the transverse edge (268, 167) of the second lug (266, 366, 166) cooperates, after folding down of the end thereof, with the facing transverse edge (268, 167) of a second opening (231, 131).

5. Clutch module according to Claim 4, characterised in that the second lug (266, 366, 166) has an end directed in the same circumferential direction as the first lug (166).

6. Clutch module according to any one of Claims 1 to 5, characterised in that the lugs (166, 266, 366) have a general triangular shape, whilst the openings (131, 231) have a rectangular shape.

7. Clutch module according to one of Claims 1 to 6, characterised by the fact that the said skirt (158) surrounding the other skirt (130) is the skirt of the cover (12).

8. Clutch module according to one of Claims 1 to 6, characterised by the fact that the free end of the skirt (158) surrounding the other (130) is at a radial distance from the skirt (130) which it surrounds which is sufficient, and which is crenellated, to constitute a target (59).

9. Clutch module according to one of Claims 1 to 6, characterised by the fact that it has a target (91) defining crenellations, the said target (91) being an attached piece of sheet metal fixed by welding to one (130) of the said skirts.

10. Clutch module according to Claim 9, in which the said module has a starter ring (78) carried by the support plate (22), characterised by the fact that the target (91) is fixed by welding to the skirt (130) of the support plate (22) whilst being placed axially against the starter ring (78).

11. Clutch module according to one of Claims 1 to 10, characterised by the fact that the clutches are the pushed type.

12. Clutch module according to one of Claims 1 to 10, characterised by the fact that the clutch is of the pulled type.

## Patentansprüche

1. Kupplungsmodul (10), insbesondere für Kraftfahrzeuge, umfassend eine Baugruppe von nebeneinander angeordneten insgesamt ringförmigen und koaxialen Teilen, unter denen axial hintereinander ein Deckel (12), eine Membranfeder (14), eine Druckplatte (16), die mit dem Deckel (12) durch Verbindungsmittel (60) drehfest verbunden ist, die eine axiale Verschiebung der Druckplatte (16) im Verhältnis zum Deckel (12) ermöglichen, eine mit einer getriebenen Welle verbindbare Kupplungsscheibe (18) und eine Gegenanpreßplatte (20) angeordnet sind, wobei die Kupplungsscheibe (18) wenigstens einen umfangsmäßigen ringförmigen Reibbelag (36, 38) umfaßt, der zwischen gegenüberliegenden radialen Reibflächen der Druckplatte (16) und der Gegenanpreßplatte (20) eingefügt ist, wobei die Membranfeder (14) am Deckel (12) und an der Druckplatte (16) zur Anlage kommt, um letztere axial in der Richtung zu beaufschlagen, die der Einspannung des Reibbelags (36, 38) entspricht, wobei die Gegenanpreßplatte (20) fest mit einem Trägerflansch (22) verbunden ist, der drehfest mit einer treibenden Welle mittels einer Reihe von Befestigungsorganen (64) verbunden werden kann, die im Verhältnis zu den Befestigungsmitteln zur Befestigung der Gegenanpreßplatte (20) am Trägerflansch (22) radial nach innen angeordnet sind, wobei die Druckplatte (16) mittels der besagten Verbindungsmittel (60) direkt drehfest mit dem Deckel (12) verbunden ist und der Deckel (12) und der Trägerflansch (22) jeweils an ihrem äußeren Umfang eine Einfassung (130, 158) umfassen, die sich axial erstreckt, wobei eine (158) der besagten Einfassungen die andere (130) wenigstens auf einem Teil ihrer axialen Länge umgibt, **dadurch gekennzeichnet,** daß die Einfassung (158), welche die andere (130) umgibt, wenigstens einen umfangsmäßig ausgerichteten Ansatz (166, 266, 366) aufweist, dessen Ende wenigstens in einer in die andere Einfassung (130) eingearbeiteten Öffnung (131, 231) umgebogen ist, wobei das Zusammenwirken wenigstens eines Querrands (167, 268) des besagten Ansatzes (166, 266, 366) mit dem gegenüberliegenden Querrand (132, 233) der Öffnung (131, 231) einen axialen Anschlag zwischen dem Deckel (12) und dem Trägerflansch (22) wenigstens in der Richtung ihrer Entfernung bzw. Trennung in axialer Richtung bildet.

2. Kupplungsmodul nach Anspruch 1, **dadurch gekennzeichnet,** daß vor dem Umbiegen des Endes des Ansatzes (166, 266, 366) dessen besagter Querrand (167, 268) einen Winkel mit dem Querrand (132, 233) der Öffnung (131, 231) bildet, so daß die axiale Position des besagten Anschlags axial verstellbar ist.

3. Kupplungsmodul nach einem der Ansprüche 1 oder 2, **dadurch gekennzeichnet,** daß wenigstens ein zweiter Ansatz (266, 366, 166) vorgesehen ist, dessen Querrand (268, 167) nach dem Umbiegen die Bildung eines axialen Anschlags zwischen dem Dekkel (12) und dem Trägerflansch (22) in der Richtung ihrer Annäherung in axialer Richtung ermöglicht.

4. Kupplungsmodul nach Anspruch 3, **dadurch gekennzeichnet,** daß der Querrand (268, 167) des zweiten Ansatzes (266, 366, 166) nach dem Umbiegen seines Endes mit dem gegenüberliegenden Querrand (268, 167) einer zweiten Öffnung (231, 131) zusammenwirkt.

5. Kupplungsmodul nach Anspruch 4, **dadurch gekennzeichnet,** daß der zweite Ansatz (266, 366, 166) ein Ende hat, das in der gleichen Umfangsrichtung wie der erste Ansatz (166) gerichtet ist.

6. Kupplungsmodul nach einem der Ansprüche 1 bis 5, **dadurch gekennzeichnet,** daß die Ansätze (166, 266, 366) eine dreieckige Gesamtform haben, während die Öffnungen (131, 231) eine rechtekkige Form aufweisen.

7. Kupplungsmodul nach einem der Ansprüche 1 bis 6, **dadurch gekennzeichnet,** daß die besagte Einfassung (158), welche die andere Einfassung (130) umgibt, die Einfassung des Deckels (12) ist.

8. Kupplungsmodul nach einem der Ansprüche 1 bis 6, **dadurch gekennzeichnet,** daß sich das freie Ende der Einfassung (158), welche die andere (130) umgibt, in einem ausreichenden radialen Abstand von der Einfassung (130), die sie umgibt, befindet und ausgezackt ist, um eine Bezugsmarkierung (59) zu bilden.

9. Kupplungsmodul nach einem der Ansprüche 1 bis 6, **dadurch gekennzeichnet,** daß es eine Bezugsmarkierung (91) umfaßt, die Einschnitte definiert, wobei die besagte Bezugsmarkierung (91) ein angefügtes Blechteil ist, das durch Schweißen fest mit einer (130) der besagten Einfassungen verbunden ist.

10. Kupplungsmodul nach Anspruch 9, wobei das besagte Modul einen am Trägerflansch (22) angebrachten Anlasserzahnkranz (78) umfaßt, **dadurch gekennzeichnet,** daß die Bezugsmarkierung (91) durch Schweißen fest mit der Einfassung (130) des Trägerflansches (22) verbunden ist, wobei sie axial an den Anlasserzahnkranz (78) angesetzt ist.

11. Kupplungsmodul nach einem der Ansprüche 1 bis 10, **dadurch gekennzeichnet,** daß die Kupplung in gedrückter Konstruktion ausgeführt ist.

12. Kupplungsmodul nach einem der Ansprüche 1 bis 10, **dadurch gekennzeichnet,** daß die Kupplung in gezogener Konstruktion ausgeführt ist.
